(19) Europäisches Patentamt
European Patent Office
Office européen des brevets

(11) Publication number: **0 096 771**
**A1**

# (12) EUROPEAN PATENT APPLICATION

(21) Application number: **83105119.8**

(22) Date of filing: **30.01.81**

(51) Int. Cl.³: **C 08 F 236/10**, C 08 L 9/06
// (C08F236/10, 228/02)

(30) Priority: **31.01.80 US 117196**
**31.01.80 US 117197**
**31.01.80 US 117198**
**31.01.80 US 117199**

(43) Date of publication of application: **28.12.83**
**Bulletin 83/52**

(84) Designated Contracting States: **BE DE FR GB IT NL**

(60) Publication number of the earlier application in accordance with Art. 76 EPC: **0034020**

(71) Applicant: **Exxon Research and Engineering Company, P.O.Box 390 180 Park Avenue, Florham Park New Jersey 07932 (US)**

(72) Inventor: **Lenz, Robert William, Albert-Ludwigs University Stefan Meier Strasse, D-7800 Freiburg (DE)**
Inventor: **Lundberg, Robert Dean, 4 Brian Drive, Bridgewater New Jersey (US)**
Inventor: **Oster, Bernd, 111 Malden, Holden Massachusetts (US)**
Inventor: **Siadat, Bahram, 43 Featherhead, Columbia Maryland (US)**
Inventor: **Weiss, Robert Alan, 59 Mansfield Apartments, Storrs Connecticut (US)**
Inventor: **Werner, Allen, 473 Fairmount Avenue, Chatham New Jersey (US)**

(74) Representative: **Field, Roger Norton et al, ESSO Engineering (Europe) Ltd. Patents & Licences Apex Tower High Street, New Malden Surrey KT3 4DJ (GB)**

## (54) A sulphonated terpolymer.

(57) A solid elastomeric terpolymer comprising 13 to 48 wight percent of styrene, 45 to 85 weight percent of butadiene and a minor proportion of a metal or amine neutralized sulphonate monomer having the formula:

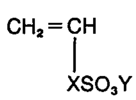

where X is aromatic or $(CH_2)_n$ wherein n = 0,1,2,3 or 4, and Y is a cation selected from groups IA, IIA, IB and IIB of the periodic table e.g. a metal neutralised styrene sulphonate, or an amine of the formula;

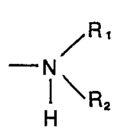

where $R_1$ and $R_2$ are $C_1$ to $C_{12}$ aliphatic groups or hydrogen, said co- or terpolymer being water insoluble and having at least 0.5 weight percent but less than 5 weight percent of chemically combined sulphur.

EP 0 096 771 A1

# A SULPHONATED TERPOLYMER

The present invention relates to terpolymers and a free radical copolymerization process for the preparation of sulfonate containing water insoluble terpolymers, wherein the resultant terpolymers usually have an $\bar{M}n$ as measured by GPC of 5,000 to 200,000 and these terpolymers have at least 0.5 weight percent of chemically combined sulfur therein, are substantially gel free, thermally stable, and stable oxidatively. The free radical copolymerization process of the present invention can be generally described as a free radical emulsion polymerization of styrene and butadiene with a sulfonate monomer which is water soluble, at a temperature sufficient to cause polymerization, wherein the initiator is preferably based on a peroxide initiator accelerated by a reducing agent, and suitable surfactants are employed. Upon completion of the free radical polymerization, the resultant latex is coagulated and the water insoluble polymer is recovered.

The present invention also relates to polymeric compositions of the sulfonated terpolymers which comprise a homogenous blend of the sulfonated terpolymers and at least one additive selected from the group consisting of inorganic fillers, non-polar process oil, and preferential plasticizers and mixtures thereof. The resultant polymeric compositions are formed by suitable plastic molding processes into elastomeric articles such as a garden hose and unit sales for footwear applications. The resultant elastomeric article has excellent low temperature flexibility, good resilience, and a rubber-like feel

The solid elastomeric terpolymer of the present invention comprises 13 to 48 weight per cent of units derived from styrene, 45 to 85 weight per cent of units derived from butadiene and a minor proportion of units derived from a metal or amine neutralised sulphonate monomer having the formula:

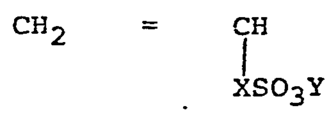

where X is aromatic or $(CH_2)_n$ . wherein n = 0, 1, 2, 3 or 4 and Y is a cation selected from Groups IA, IIA, IB and IIB of the periodic table or an amine of the formula:

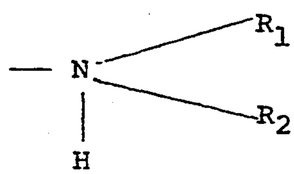

where $R_1$ and $R_2$ can be aliphatic groups of $C_1$ to $C_{12}$ or hydrogen, said terpolymer being water insoluble having at least 0.5 weight percent sulfur to less than 5 weight percent sulfur chemically combined and having a reduced viscosity as measured in a solvent at a concentration of 10g/litre of greater than 0.2 and less than 5.0

The terpolymers of the present invention are water insoluble and usually substantially gel free, thermally stable and oxidatively stable.

The formed terpolymers styrene/butadiene and sulphonate monomer contain 13 to 48 wt.% units derived from styrene, preferably 20 to 40 wt.%, and more preferably about 25 to about 35 wt.%; units derived from styrene, 45 to 85 wt.% of units derived from butadiene, preferably 55 to 80 wt.% and more preferably 65 to 75 wt.% units derived from butadiene. The amount of sulphonate monomer contained in these terpolymers is defined in terms of weight percent chemically combined sulphur. The terpolymers of the present invention contain 0.5 to 5 weight % of chemically combined sulphur, preferably 0.6 to 3 and more preferably 0.7 to 2.o weight percent combined sulphur. The minor proportion of the sulphonate monomer is heretofore defined as a termonomer (the sulphonate-containing species) concentration corresponding to 0.5 to 5 weight percent chemically combined sulphur.

The present invention relates to the formation of sulphonate containing co- or terpolymers which are

formed by a free radical co- or terpolymerization process. The monomers used in the free radical emulsion copolymerization process are styrene and butadiene which are co- or terpolymerized with sulfonate containing monomers.

In general, the styrene and butadiene and sulfonate containing monomer is dispersed in a water phase in the presence of an initiator which is preferably soluble in the hydrocarbon phase, a water soluble reducing agent, and a suitable surfactant, wherein the temperature is sufficient to initiate polymerization. The resultant latex is coagulated usually by the addition of an aqueous salt solution and the recovered terpolymer is washed with water and subsequently dried under vacuum at room temperature. Alternatively, the latex can be coagulated by the addition of methanol.

The terpolymers formed from the free radical emulsion terpolymerization process of the present invention can be generally described as having an $\bar{M}n$ as measured by GPC of 5,000 to 200,000, more preferably 10,000 to 100,000.

A typical, but non-limiting example of the terpolymer which can be formed by the present free radical emulsion terpolymerization process is butadiene/styrene/sodium styrene sulphonate terpolymer.

Obviously an infinite number of terpolymers can be formed by the present free radical co- or terpolymerization process.

A preferred sulphonated polymer to be

used in forming the terpolymer with the styrene and butadiene is sodium styrene sulfonate. The molar ratio of the sulfonate containing monomer to the mixture of styrene and butadiene is 1/200 to 1/5, more preferably 1/150 to 1/6, and most preferably 1/100 to 1/9.

The sulfonate containing monomers of the present invention which are water soluble can be generally described as a monomer having unsaturation and a metal or amine sulfonate group and are as previously defined.

Particularly suitable metal cations are sodium, potassium and zinc, and an especially preferred metal cation is sodium. Typical, but non-limiting examples of suitable sulfonate containing monomers are:

1) $CH_2 = CHSO_3\ ^-Na^+$ sodium vinyl sulfonate
2) $CH_2 = CHCH_2SO_3\ ^-Na^+$ sodium allyl sulfonate
3) $CH_2 = CH$ 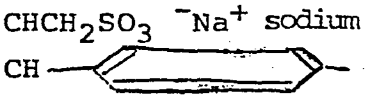 $SO_3\ ^-Na^+$ sodium styrene sulfonate

An especially preferred sulfonate containing monomer is metal styrene sulfonate. The molar ratio of sulfonate containing monomer to conjugated diene is 1/200 to about 1/5, more preferably 1/150 to 1/6 and most preferably 1/100 to 1/9.

The redox emulsion polymerization recipe used in this invention is effective in initiating the copolymerization of water-insoluble and water-soluble comonomers in an emulsion system. Because the peroxide initiator is dissolved in the hydrocarbon monomer and the redox activator is dissolved in the water, the surface of the micelle/growing polymer particle is believed to be the locus of formation of initiator molecules as well as the polymerization locus. Water phase homopolymerization of the polar, water soluble monomer is effectively depressed because of low primary radical concentration in the aqueous phase.

Similarly, the activity of the free radical catalyst in the hydrocarbon monomer phase is substantially less than in the vicinity of the reducing agent. As a result the polymerization of homopolymers is believed to be effectively depressed.

Reducing agents suitable for this invention are those known in the art with the additional requirement that they be soluble in water. A preferred reducing agent is triethylene tetraamine.

A variety of free radical catalysts can be employed in this invention with the requirement that they are substantially soluble in the diene monomer phase. This includes a preferential class of free radical initiators such as benzoyl peroxide, cumeme peroxide, diisopropylbenzene hydroperoxide, t-butyl hydroperoxide and similar systems which will be preferentially soluble in the monomer phase as opposed to the aqueous phase. There are a large number of such peroxides used in the art and those having the appropriate solubility behavior and suitable decomposition temperatures in the presence of the reducing agents are satisfactory for the purposes of this invention.

The surfactants employed for this invention are varied and well known in the art. The typical emulsifiers or surfactants can be employed, however, some are more effective than others in generating latexes of better stability. A preferred emulsifier is sodium lauryl sulfate.

The buffering agents employed in the instant polymerization process are selected from sodium carbonate, ammonia, sodium acetate, trisodium phosphate, etc. These buffering agents are employed at a concentration of 0.1 to 5 grams/100 grams water employed in the emulsion system.

Chain transfer agents can be readily employed in the present polymerization process for controlling the molecular weight of the resultant copolymer. The concentration of chain transfer agent is about .05 to about 0.75 grams/100 grams of the combined weight of the sulfonate containing monomer and the conjugated diene.

The free radical emulsion zation of the water soluble sulfonate containing polymer and styrene and butadiene yields a stable latex, wherein the resultant water insoluble terpolymer is not covalently crosslinked and possesses substantial ionic crosslinking, and has the required 0.5 to 5 weight percent of chemically combined sulfur, more preferably 0.6 to 3wt.% The resultant latex can be coagulated by the addition of an aqueous salt solution to the emulsion at a volume ratio of the aqueous salt solution to total volume of the emulsion of 10 to 0.5, more preferably 3 to .7, and most preferably 2 to 1. The water insoluble co- or terpolymer is recovered by filtration and subsequently washed with water and dried under vacuum conditions. Alternatively, the polymer can be coagulated by precipitation with alcohol such as methanol.

A preferential plasticizer can be incorporated into the neutralized sulfonated elastomeric terpolymer at less than 80, more preferably at 5 to 60, and most preferably at 8 to 30 parts by weight per 100 parts of the sulphonated co- or terpolymer. The preferential plasticisers are fatty acids having 8 to 30 carbon atoms per molecule

or metallic salts of the fatty acids or mixtures thereof, wherein the metal ion of the metallic salt of the fatty acid is antimony, iron, aluminum, lead or Groups IA, IIA, IB or IIB of the Periodic Table of Elements. Alternatively, other preferential plasticizers are organic esters, phenols, trialkyl phosphates, alcohols, amines, amides, ammonium salts of carboxylic acids or mixtures thereof. The preferred plasticizers are fatty acids or metallic salts of fatty acid or mixtures thereof. Especially preferred plasticizers are zinc stearate or calcium stearate. The resultant neutralized sulfonated elastomeric polymer with preferential plasticizer is isolated from the solution by conventional steam stripping and filtration.

The neutralized sulfonated elastomeric polymer is blended with a filler and a non-polar backbone process oil by techniques well known in the art. For example, the blend composition can be compounded on a two-roll mill. Other methods known in the art which are suitable for making these compositions include those methods employed in the plastic and elastomer industries for mixing polymer systems. A suitable polymer blend composition of this invention can be obtained through the use of a high shear batch intensive mixer called the Banbury. Alternatively, economic advantages in terms of time and labour savings can be obtained through the use of a Farrel Continuous Mixer, a twin screw extruder, or tandem extrusion techniques which are continuous mixing types of equipment. The Banbury mixing device is the preferred batch type mixer, and the twin screw extruder is the preferred continuous mixer.

The fillers employed in the present invention are selected from talcs, ground calcium carbonate, water precipitated calcium carbonate, or delaminated, calcined or hydrated clays and mixtures thereof. These fillers are incorporated into the blend composition at 25 to 300

parts by weight per 100 parts of the sulfonated terpolymer, more perferably at 25 to 250 and most preferably at 25 to 200. Typically, these fillers have a particle size of 0.03 to 20 microns, more preferably 0.3 to 10, and most preferably 0.5 to 10. The oil absorption as measured by grams of oil absorbed by 100 grams of filler is 10 to 100, more preferably 10 to 85 and most preferably 10 to 75. Typical fillers employed in this invention are illustrated in Table I.

TABLE I

| Filler | Code # | Oil Absorption grams of oil/100 grams of filler | Specific Gravity | Avg. Particle Size Micron | pH |
|---|---|---|---|---|---|
| Calcium carbonate ground | Atomite | 15 | 2.71 | | 9.3 |
| Calcium carbonate precipitated | Purecal U | 35 | 2.65 | .03-.04 | 9.3 |
| Delaminated clay | Polyfil XB | 30 | 2.61 | 4.5 | 6.5-7.5 |
| Hydrated clay | Suprex | | 2.6 | 2 | 4.0 |
| Calcined clay | Icecap K | 50-55 | 2.63 | 1 | 5.0-6.0 |
| Talc magnesium silicate | Mistron Vapor | 60-70 | 2.75 | 2 | 9.0-7.5 |

The oils employed in the present invention are non-polar process oils having less than 2 wt.% polar type compounds as measured by molecular type clay gel analysis. These oils are selected from paraffinics ASTM Type 104B as defined in ASTM-D-2226-70, aromatics ASTM Type 102 or naphthenics ASTM Type 104A, wherein the oil has a flash point by the Cleveland open cup of at least 350°F, (177°C) a pour point of less than 40°F (4.4°C), a viscosity of 70 to 3000 ssu's at 100°F (38°C) and a number average molecular weight of about 300 to 1000, and more preferably 300 to 750. The preferred process oils are paraffinics. Table II illustrates typical oils encompassed by the scope of this invention.

The oils are incorporated into the blend composition at a concentration level of 20 to 200 parts by weight per 100 parts of the sulfonated co- or terpolymer, more preferably at 20 to 175, and most preferably at 25 to 150.

TABLE II

| Type Oil | Oil Code # | Viscosity ssu | $M_n$ | % Polars | % Aromatic | % Saturates |
|---|---|---|---|---|---|---|
| Paraffinic | Sunpar 115 | 155 | 400 | 0.3 | 12.7 | 87.0 |
| Paraffinic | Sunpar 180 | 750 | 570 | 0.7 | 17.0 | 82.3 |
| Paraffinic | Sunpar 2280 | 2907 | 720 | 1.5 | 22.0 | 76.5 |
| Aromatic | Flexon 340 | 120 | - | 1.3 | 70.3 | 28.4 |
| Naphthenic | Flexon 765 | 505 | - | 0.9 | 20.8 | 78.3 |

The filler to oil ratio in the present instant application is critical and should be 0.2 to 2, more preferably 0.5 to 1.75 and most preferably 0.75 to 1.25.

Various other additives can be incorporated into the blend compositions to improve the physical properties, the appearance, the chemical properties of the formed elastomeric article or to modify the processability of the blend compositions.

Additionally, reinforcing fillers can be added as additives to the blends of sulfonated polymer, filler and oil, wherein the reinforcing filler is silica, carbon black, calcium silicate or mixtures thereof. These reinforcing agents are generally characterized as having particle sizes below 0.1 microns and oil absorption above 100. These reinforcing fillers are incorporated in the blend composition at less than 50 parts by weight based on 100 parts of sulfonated polymer, more preferably 1 to 25.

The invention is illustrated in the following Examples.

Example 1

Reaction Formulation:

12 g styrene
28 g butadiene
3.0 g sodium styrene sulfonate (NaSS)
100 g boiled, distilled water
4.6 g sodium lauryl sulfate (emulsifier)
1.0 g diisopropylbenzene hydroperoxide (initiator)
1.0 g triethylenetetramine (reducing agent)
0.28 g 1-dodecanethiol (chain transfer agent)
0.6 g $Na_4P_2O_7 \cdot 10H_2O$ (buffer)

A free radical emulsion polymerization was carried out in a 1 quart capped beverage bottle at room temperature ($\sim$25°C). The reaction emulsion was agitated by means of a mechanical shaker. The reaction was carried out for 17.5 hours to a yield of about 95% and the latex was coagulated by the addition of methanol. The recovered polymer was washed with methanol and water and dried under vacuum at room temperature.

The styrene-butadiene-NaSS terpolymer contained 0.75 percent sulfur (23 milliequivalents NaSS per 100 grams total polymer). The terpolymer was not tacky, appeared to be a strong, elastic-solid, and was soluble in a mixed solvent of toluene and methanol (90/10). In the absence of the methanol cosolvent -- that is, in toluene alone -- this material formed a swollen gel and could have been considered covalently cross-linked. Its solubility by the addition of 10 percent methanol shows, however, that the terpolymer is not covalently cross-linked.

The terpolymer was compression molded at 370°F (188°C) and analyzed using thermal mechanical analysis from -120°C to 230°C using a heating rate of 10°C/minute. A glass transition was clearly apparent at about -50°C. Above the glass transition, only a rubbery plateau was observed, behavior characteristic of a covalently cross-linked polymer. The tested sample, however, was completely soluble in a mixed solvent of toluene and methanol (90/10) which shows that it was not covalently cross-linked. The rubbery plateau which extended to above 200°C is interpreted as evidence of strong, persistent ionic cross-linking.

Microtensile dumbbells were cut from the compression molded pad described above and tensile measurements were made with an Instron Universal Testing Machine. The properties are shown in Table III. These properties are significantly higher than can be obtained in a non-covalently cross-linked copolymer not containing

the NaSS, and they demonstrate the effect of the ionic cross-linking on the elastomeric mechanical properties.

TABLE III

Tensile Properties of Styrene-Butadiene-NaSS Terpolymer

| | |
|---|---|
| Stress at 100% Elongation | 395 psi (2723 $KN/M^2$) |
| Ultimate Strength | 685 psi (4723 $KN/M^2$) |
| Ultimate Elongation | 200% |

Most importantly, it is seen that the stress at 100% elongation of 395 psi (2723 $KN/M^2$) is quite high compared to materials which do not possess ionic groups. It is often seen that such stress levels can be achieved at elongations of 1000 to 1500%; however, for many applications, it is much preferred that such properties be attained at lower strain levels. The terpolymers of the present invention appear quite suited to achieve those characteristics.

Example 2 (Comparison)

Reaction Formulation:

93g butadiene
0 NaSS
160g boiled, distilled water
0.37g benzoyl peroxide
0.95g $(NH_4)_2FeSO_4 \cdot 6H_2O$
7.5g sodium lauryl sulphate
0.94g $Na_4P_2O_7 \cdot 10H_2O$
1.8g 1-dodecanethiol

The procedure of Example 1 was followed substantially with the above formulation and it is noted that no sodium styrene sulphonate was added. When the polymer was isolated after 40 hours the resulting transparent polymer was completely soluble in xylene processed in intrinsic viscosity of 1.7 and was tacky with little apparent strength. These results show clearly that the presence of the metal sulphonate groups at

the appropriate level dramatically alters the properties and solubility of the resulting product.

Example 3 (Comparison)

Reaction Formulation:

38.8g butadiene
100g boiled distilled water
1.0g triethylene tetramine
1.0g diisopropylbenzene hydroperoxide

4.6g Pluronic F-68 (emulsifier)
0.6g $Na_4P_2O_7.10H_2O$
0.28g 1-dodecanethiol

The polymerization of Example 1 was followed but there was no sodium styrene sulphonate present. No polymer product was recovered after 20 hours reaction.

CLAIMS

1. A solid elastomeric terpolymer comprising 13 to 48 weight percent of units derived from styrene, 45 to 85 weight percent of units derived from butadiene and a minor proportion by weight of units derived from a metal or amine neutralized sulphonate monomer having the formula:

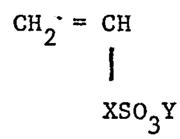

where X is aromatic or $(CH_2)_n$ wherein n = 0,1,2,3 or 4 and Y is a cation selected from Groups IA, IIA, IB and IIB of the periodic table or an amine of the formula:

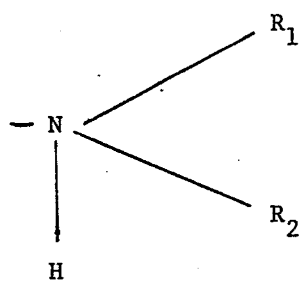

where $R_1$ and $R_2$ are $C_1$ to $C_{12}$ aliphatic groups or hydrogen, said terpolymer being water insoluble, having at least 0.5 weight percent but less than 5 weight percent of sulphur chemically combined and having a reduced viscosity as measured in a solvent at a concentration of 10gm/litre of greater than 0.2 and less than 5.0.

2. A terpolymer according to claim 1 wherein said sulphonate containing monomer is a metal neutralized styrene sulphonate.

3. A terpolymer according to either of claim 3 and 2 which is gel-free, thermally stable and oxidatively stable.

4. A polymeric composition which comprises:

(a) a solid elastomeric terpolymer according to any one of the preceding claims;

(b) less than 80 parts by weight of a preferential plasticizer per 100 parts of the sulphonated co- or terpolymer;

(c) 25 to 300 parts by weight of a filler per 100 parts of the sulphonated co- or terpolymer; and

(d) 20 to 200 parts by weight of a non-polar process oil having less than 2 weight percent polar compounds per 100 parts of the sulphonated terpolymer.

5. A composition according to claim 4, wherein said preferential plasticizer is a fatty acid having 8 to 30 carbon atoms per molecule, a metallic salt of said carboxylic acid, an amide or a mixture thereof.

6. A composition according to claim 5, wherein said metallic salt is zinc stearate or calcium stearate.

7. A composition according to claim 5, wherein said preferential plasticizer is a combination of carboxylic acid and a metallic salt of said carboxylic acid, the metal ion of said metallic salt being aluminium, antimony, iron, lead or a metal of Groups IA, IIA, IB or IIB of the Periodic Table of Elements of a mixture thereof.

8. A composition according to any one of claims 4 to 7 wherein said filler is clay, talc, calcium carbonate or a mixture thereof.

9. A composition according to any one of claims 4 to 8 wherein said non-polar process oil is paraffinic, naphthenic or aromatic or a mixture thereof

10. A process for forming a solid elastomeric terpolymer according to any one of claims 1,2 or 3 which comprises contacting a solution of a mixture of said styrene and said butadiene with said sulphonate containing monomer dispersed in water with a hydrocarbon soluble initiator in the presence of a surfactant and a water soluble reducing agent and providing a temperature sufficient to initiate polymerisation wherein the resulting latex is coagulated and the recovered terpolymer is washed with water and subsequently dried.

11. A process according to claim 10 wherein at least one additive is added to reaction medium, the additive being a buffering agent, a chain transfer agent or a mixture thereof.

0096771

European Patent Office

# EUROPEAN SEARCH REPORT

Application number

EP 83 10 5119

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A- 895 033 (DOW CHEMICAL)<br>* Claims 1,4 *<br>----- | 1-3,10,11 | C 08 F 236/10<br>C 08 L 9/06 //<br>(C 08 F 236/10<br>C 08 F 228/02 ) |
| | | | **TECHNICAL FIELDS SEARCHED (Int. Cl. 3)** |
| | | | C 08 F<br>C 08 L |

The present search report has been drawn up for all claims

| Place of search | Date of completion of the search | Examiner |
|---|---|---|
| THE HAGUE | 27-09-1983 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82